(19) Europäisches Patentamt
European Patent Office
Office européen des brevets

(11) EP 3 129 414 B1

(12) # EUROPÄISCHE PATENTSCHRIFT

(45) Veröffentlichungstag und Bekanntmachung des Hinweises auf die Patenterteilung:
**28.08.2019 Patentblatt 2019/35**

(21) Anmeldenummer: **15714471.8**

(22) Anmeldetag: **01.04.2015**

(51) Int Cl.:
***C08F 218/08*** (2006.01) ***C09J 131/04*** (2006.01)

(86) Internationale Anmeldenummer:
**PCT/EP2015/057146**

(87) Internationale Veröffentlichungsnummer:
**WO 2015/155085 (15.10.2015 Gazette 2015/41)**

(54) **VERFAHREN ZUR HERSTELLUNG EINER WÄSSRIGEN POLYMERISATDISPERSION**
METHOD FOR PRODUCING A AQUEOUS POLYMER DISPERSION
PROCÉDÉ DE FABRICATION UNE DISPERSION AQUEUSE DE POLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2014 EP 14164328**

(43) Veröffentlichungstag der Anmeldung:
**15.02.2017 Patentblatt 2017/07**

(73) Patentinhaber: **BASF SE**
**67056 Ludwigshafen am Rhein (DE)**

(72) Erfinder:
- **JIMENEZ GARCIA, Lucia**
**68199 Mannheim (DE)**
- **BLAUL, Jürgen**
**68723 Oftersheim (DE)**

(74) Vertreter: **BASF IP Association**
**BASF SE**
**G-FLP-C006**
**67056 Ludwigshafen (DE)**

(56) Entgegenhaltungen:
**WO-A1-2013/045259 WO-A1-2013/120752**
**WO-A1-2013/124417 GB-A- 1 363 432**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 129 414 B1

## Beschreibung

Gegenstand der vorliegenden Erfindung ist ein Verfahren zur Herstellung einer wässrigen Dispersion eines Polymerisats P durch radikalisch initiierte wässrige Emulsionspolymerisation ethylenisch ungesättigter Verbindungen, welches dadurch gekennzeichnet ist, dass

| | |
|---|---|
| $\geq$ 0,1 und $\leq$ 5,0 Gew.-% | wenigstens einer $\alpha,\beta$-monoethylenisch ungesättigten $C_3$- bis $C_6$- Mono- oder Dicarbonsäure (Monomere A), |
| $\geq$ 0,1 und $\leq$ 10 Gew.-% | wenigstens einer monoethylenisch ungesättigten Verbindung mit wenigstens einer Epoxygruppe (Monomere B), |
| $\geq$ 0,1 und $\leq$ 5,0 Gew.-% | wenigstens einer monoethylenisch ungesättigten Verbindung mit wenigstens einer Sulfonsäuregruppe (Monomere C), |
| $\geq$ 70 und $\leq$ 95 Gew.-% | wenigstens eines Esters aus Vinylalkohol und einer $C_1$- bis $C_5$-Monocarbonsäure (Monomere D), und |
| $\geq$ 0 und $\leq$ 25 Gew.-% | wenigstens einer ethylenisch ungesättigten Verbindung, welche sich von den Monomeren A bis D unterscheidet (Monomere E), |

wobei sich die Mengen der Monomeren A bis E auf 100 Gew.-% aufsummieren, zur Polymerisation eingesetzt werden.

Gegenstand der vorliegenden Erfindung sind ferner die nach dem erfindungsgemäßen Verfahren zugänglichen wässrigen Polymerisatdispersionen selbst, die Verwendung dieser wässrigen Polymerisatdispersionen als Bindemittel für körnige und/oder faserförmigen Substrate, die daraus hergestellten Formkörper sowie die Verwendung dieser Formkörper zur Herstellung bitumierter Dachbahnen.

Die WO 2013/124417 A1 offenbart ein Verfahren zur Herstellung von wässrigen Dispersionen von Vinylester-Ethylen-Acrylsäureamid-Mischpolymerisaten mittels radikalisch initiierter Emulsionspolymerisation, die so erhältlichen wässrigen Dispersionen und deren Verwendung beispielsweise als Binde- oder Klebemittel, insbesondere zur Faserbindung von Vliesstoffen.

Als wesentlicher Stand der Technik wird die WO 2011/131279 sowie der darin zitierte Stand der Technik angesehen, welche u.a. wässrige Bindemittel für Mineralwollfasermatten offenbart, umfassend mit Epoxidgruppen und/oder Carboxylgruppen funktionalisierte Emulsionspolymere sowie ein Amin und/oder Aminderivat als Vernetzer.

Nachteilig an den wässrigen Bindemitteln des Standes der Technik ist, dass Amine und/oder Aminderivate als Vernetzer benötigt werden.

Aufgabe der vorliegenden Erfindung war es daher, wässrige Bindemittel für körnige und/oder faserförmige Substrate zur Verfügung zu stellen, welche ohne die Verwendung von Aminen und/oder Aminderivaten auskommen und welche zur Herstellung von Formkörpern mit einer guten Wärmestandfestigkeit eingesetzt werden können.

Die Aufgabe wurde gelöst durch die wässrigen Polymerisatdispersionen, welche gemäß des eingangs genannten Verfahrens hergestellt werden.

Als Monomere A kommen alle $\alpha,\beta$-monoethylenisch ungesättigten $C_3$- bis $C_6$-, bevorzugt $C_3$- oder $C_4$-Mono- oder Dicarbonsäuren in Betracht, wie beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure. Die Monomeren A umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist das Monomere A ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure, wobei Acrylsäure, Methacrylsäure und/oder Itaconsäure besonders bevorzugt sind. Selbstverständlich umfassen die Monomeren A auch die voll- oder teilneutralisierten wasserlöslichen Salze, insbesondere die Alkalimetall- oder Ammoniumsalze, der vorgenannten Säuren.

Die Menge der zur Herstellung des Polymerisats P eingesetzten Monomeren A beträgt $\geq$ 0,1 und $\leq$ 5,0 Gew.-%, bevorzugt $\geq$ 0,5 und $\leq$ 4,0 Gew.-% und insbesondere bevorzugt $\geq$ 0,5 und $\leq$ 3,0 Gew.-%.

Als Monomeren B können alle monoethylenisch ungesättigten Verbindungen eingesetzt werden, welche wenigstens eine Epoxygruppe aufweisen. Beispiele für Monomeren B sind Vinyloxiran, Allyloxiran, Glycidylacrylat und/oder Glycidylmethacrylat. Mit Vorteil ist das wenigstens eine Monomere B ausgewählt aus der Gruppe umfassend Vinyloxiran, Allyloxiran, Glycidylacrylat und Glycidylmethacrylat. Mit besonderem Vorteil wird Glycidylacrylat und/oder Glycidylmethacrylat eingesetzt, wobei Glycidylmethacrylat besonders bevorzugt ist.

Die Menge der zur Herstellung des Polymerisats P eingesetzten Monomeren B beträgt $\geq$ 0,1 und $\leq$ 10 Gew.-%, bevorzugt $\geq$ 2,0 und $\leq$ 8,0 Gew.-% und insbesondere bevorzugt $\geq$ 3,0 und $\leq$ 7,0 Gew.-%.

Als Monomere C können alle monoethylenisch ungesättigte Verbindungen eingesetzt werden, welche wenigstens eine Sulfonsäuregruppe aufweisen, wie beispielsweise Vinylsulfonsäure, Allylsulfonsäure, Styrolsulfonsäure oder 2-Acrylamido-2-methylpropansulfonsäure. Mit besonderem Vorteil werden Vinylsulfonsäure und/oder 2-Acrylamido-2-methylpropansulfonsäure eingesetzt, wobei Vinylsulfonsäure besonders bevorzugt ist. Selbstverständlich umfassen die Monomeren C auch die voll- oder teilneutralisierten Salze, insbesondere die Alkalimetall- oder Ammoniumsalze, der vorgenannten Säuren.

Die Menge der zur Herstellung des Polymerisats P eingesetzten Monomeren C beträgt ≥ 0,1 und ≤ 5,0 Gew.-%, bevorzugt ≥ 0,1 und ≤ 1,5 Gew.-% und insbesondere bevorzugt ≥ 0,1 und ≤ 1,0 Gew.-%.

Erfindungsgemäß können als Monomere D alle Ester aus Vinylalkohol und einer $C_1$- bis $C_5$-Monocarbonsäure, wie Ameisensäure, Essigsäure, Propionsäure, Buttersäure, 2-Methylpropionsäure, Valeriansäure oder Pivalinsäure eingesetzt werden. Mit Vorteil werden Vinylacetat und/oder Vinylpropionat eingesetzt, wobei Vinylacetat besonders bevorzugt ist.

Die Menge der zur Herstellung des Polymerisats P eingesetzten Monomeren D beträgt ≥ 70 und ≤ 95 Gew.-%, bevorzugt ≥ 75 und ≤ 85 Gew.-% und insbesondere bevorzugt ≥ 78 und ≤ 83 Gew.-%.

Als Monomere E können alle radikalisch polymerisierbaren ethylenisch ungesättigten Verbindungen eingesetzt werden, welche sich von den Monomeren A bis D unterscheiden. Mit Vorteil ist das wenigstens eine Monomere E ausgewählt ist aus der Gruppe umfassend Olefine, wie beispielsweise Ethen, Propen oder 1-Buten, konjugierte aliphatische $C_4$- bis $C_9$-Dienverbindungen, wie 1,3-Butadien oder Isopren, Ester aus Vinylalkohol und einer $C_6$- bis $C_{18}$-Monocarbonsäure, wie Vinyllaurat, Vinyl-2-ethylhexansäureester oder Versaticsäurevinylester, $C_1$- bis $C_{10}$-Alkylacrylate, wie Ethylacrylat, n-Butylacrylat oder 2-Ethylhexylacrylat, $C_1$- bis $C_{10}$-Alkylmethacrylate, wie Methylmethacrylat, Ethylmethacrylat, n-Butylmethacrylat oder n-Hexylmethacrylat, $C_5$- bis $C_{10}$-Cycloalkylacrylate und -methacrylat, wie Cyclopentyl- bzw. Cyclohexylacrylat bzw. -methacrylat, $C_1$- bis $C_{10}$-Dialkylmaleinate und $C_1$- bis $C_{10}$-Dialkylfumarate, wie Dimethylmaleinat oder Dimethylfumarat, vinylaromatische Monomere, wie Styrol, α-Methylstyrol, 2- 3- oder 4-Methylstyrol, o- oder p-Vinyltoluol oder p-Acetoxystryrol, Mono- oder Dinitrile einer ethylenisch ungesättigten $C_3$- bis $C_6$-Mono- oder Dicarbonsäure, wie Acrylnitril oder Methacrylnitril und Mono- oder Dicarbonsäureamide einer ethylenisch ungesättigten $C_3$- bis $C_6$-Mono- oder Dicarbonsäure, wie Acrylamid oder Methacrylamid.

Als Monomere E können selbstverständlich auch noch andere ethylenisch ungesättigte Verbindungen eingesetzt werden, wie beispielsweise solche, welche wenigstens zwei nicht konjugierte ethylenisch ungesättigte Gruppen aufweisen. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat, Tri-Ester dreiwertiger Alkohole mit α,β-monoethylenisch ungesättigten Monocarbonsäuren, wie beispielsweise Glyzerintriacrylat, Glyzerintrimethacrylat, Trimethylolpropantriacrylat, Trimethylolpropantrimethacrylat, sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Insbesondere bevorzugt sind 1,4-Butylenglykoldiacrylat, Allylmethacrylat und/oder Divinylbenzol.

Als weitere Monomere E kommen alle monoethylenisch ungesättigten silangruppenhaltigen Verbindungen in Betracht. Mit besonderem Vorteil weisen diese Monomeren E eine hydrolysierbare Silangruppe auf. Vorteilhaft enthalten hydrolysierbare Silangruppen wenigstens eine Alkoxygruppe oder ein Halogenatom, wie beispielsweise Chlor. Erfindungsgemäß vorteilhaft einsetzbare Monomere E sind in der WO 2008/150647, Seite 9, Zeilen 5 bis 25 offenbart. Durch ihre ausdrückliche Bezugnahme sollen diese Monomere E als Bestandteil der vorliegenden Beschreibung angesehen werden. Mit besonderem Vorteil werden 3-Methacryloxypropyltrimethoxysilan, 3-Methacryloxypropyltriethoxysilan, Vinyltriacetoxysilan und/oder Vinylethoxydimethoxysilan eingesetzt. Dabei werden diese Monomeren E häufig dann bevorzugt eingesetzt, wenn anorganische körnige und/oder faserförmige Substrate, wie insbesondere Glasfasern oder Mineralfaser beispielsweise Asbest oder Steinwolle, gebunden werden sollen.

Die Menge der zur Herstellung des Polymerisats P eingesetzten Monomeren E beträgt ≥ 0 und ≤ 25 Gew.-%, bevorzugt ≥ 0,1 und ≤ 20 Gew.-% und insbesondere bevorzugt ≥ 5,0 und ≤ 15 Gew.-%.

In einer bevorzugten Ausführungsform werden im erfindungsgemäßen Verfahren zur Herstellung des Polymerisats P

| | |
|---|---|
| ≥ 0,5 und ≤ 4,0 Gew.-% | wenigstens eines Monomeren A, |
| ≥ 2,0 und ≤ 8,0 Gew.-% | wenigstens eines Monomeren B, |
| ≥ 0,1 und ≤ 1,5 Gew.-% | wenigstens eines Monomeren C, |
| ≥ 75 und ≤ 85 Gew.-% | wenigstens eines Monomeren D, und |
| ≥ 0,1 und ≤ 20 Gew.-% | wenigstens eines Monomeren E |

eingesetzt, während in einer besonders bevorzugten Ausführungsform im erfindungsgemäßen Verfahren zur Herstellung des Polymerisats P

| | |
|---|---|
| ≥ 0,5 und ≤ 3,0 Gew.-% | wenigstens eines Monomeren A, |
| ≥ 3,0 und ≤ 7,0 Gew.-% | wenigstens eines Monomeren B, |
| ≥ 0,1 und ≤ 1,0 Gew.-% | wenigstens eines Monomeren C, |
| ≥ 78 und ≤ 83 Gew.-% | wenigstens eines Monomeren D, und |
| ≥ 5,0 und ≤ 15 Gew.-% | wenigstens eines Monomeren E |

eingesetzt werden.

In einer Ausführungsform werden im erfindungsgemäßen Verfahren zur Herstellung einer wässrigen Dispersion eines Polymerisats P als Monomere A Acrylsäure und/oder Methacrylsäure, als Monomere B Glycidylacrylat und/oder Glycidylmethacrylat, als Monomer C Vinylsulfonsäure, als Monomer D Vinylacetat und als Monomere E n-Butylacrylat und/oder 2-Ethylhexylacrylat eingesetzt.

In einer bevorzugten Ausführungsform werden daher im erfindungsgemäßen Verfahren zur Herstellung einer wässrigen Dispersion eines Polymerisats P

| | |
|---|---|
| ≥ 0,5 und ≤ 3,0 Gew.-% | Acrylsäure und/oder Methacrylsäure, |
| ≥ 3,0 und ≤ 7,0 Gew.-% | Glycidylacrylat und/oder Glycidylmethacrylat, |
| ≥ 0,1 und ≤ 1,0 Gew.-% | Vinylsulfonsäure, |
| ≥ 78 und ≤ 83 Gew.-% | Vinylacetat, und |
| ≥ 5,0 und ≤ 15 Gew.-% | n-Butylacrylat und/oder 2-Ethylhexylacrylat |

eingesetzt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt. Von dieser allgemeinen Verfahrensweise unterscheidet sich die Herstellung einer wässrigen Dispersion des Polymerisats P lediglich durch den spezifischen Einsatz der vorgenannten Monomeren A bis E. Dabei ist es selbstverständlich, dass zur Herstellung des Polymerisats P im Rahmen der vorliegenden Schrift auch die dem Fachmann geläufigen Saat-, Stufen- und Gradientenfahrweisen mit umfasst sein sollen.

Zur Herstellung der erfindungsgemäßen wässrigen Dispersions eines Polymerisats P (wässrige Polymerisat P-Dispersion) kann die Gesamtmenge der Monomeren A bis E (Gesamtmonomerenmenge) im wässrigen Reaktionsmedium vor Initiierung der Polymerisationsreaktion vorgelegt werden. Es ist aber auch möglich, gegebenenfalls lediglich eine Teilmenge der Monomeren A bis E im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben. Dabei kann die Dosierung der Monomeren A bis E als separate Einzelströme, als inhomogene oder homogene (Teil)gemische oder als Monomerenemulsion erfolgen. Mit Vorteil werden die Monomeren A bis E in Form eines homogenen Monomerengemisches, insbesondere in Form einer wässrigen Monomerenemulsion dosiert.

Zur Herstellung der erfindungsgemäß eingesetzten wässrigen Polymerisate P-Dispersion werden Dispergierhilfsmittel mitverwendet, die sowohl die Monomerentröpfchen, wie auch die gebildeten Polymerisatteilchen im wässrigen

Medium dispers verteilt halten und so die Stabilität der erzeugten wässrigen Polymerisat P-Dispersion gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Als Dispergierhilfsmittel werden jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

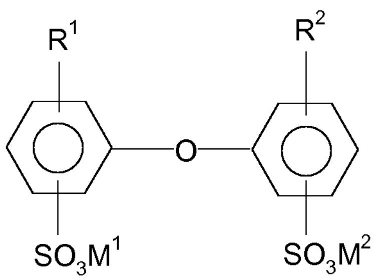

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen

2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge $\geq$ 0,005 und $\leq$ 10 Gew.-%, vorzugsweise $\geq$ 0,01 und $\leq$ 5 Gew.-%, insbesondere $\geq$ 0,1 und $\leq$ 3 Gew.-%, jeweils bezogen auf die Gesamtmonomerenmenge, eingesetzt.

Die Gesamtmenge der als Dispergierhilfsmittel zusätzlich oder statt der Emulgatoren eingesetzten Schutzkolloide beträgt oft $\geq$ 0,1 und $\leq$ 40 Gew.-% und häufig $\geq$ 0,2 und $\leq$ 25 Gew.-%, jeweils bezogen die Gesamtmonomerenmenge.

Bevorzugt werden jedoch anionische und/oder nichtionische Emulgatoren als Dispergierhilfsmittel eingesetzt.

Zur Herstellung der erfindungsgemäßen wässrigen Polymerisate P-Dispersion kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge des Dispergierhilfsmittels kontinuierlich oder diskontinuierlich zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Zur Herstellung der erfindungsgemäßen wässrigen Polymerisate P-Dispersion kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke

zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 60 bis 100 °C angewendet. Die radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A bis E mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm unter Sauerstoffausschluss, insbesondere unter Inertgasatmosphäre, wie beispielsweise unter Stickstoff oder Argon durchgeführt.

Das wässrige Reaktionsmedium kann prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können während der Emulsionspolymerisation optional auch radikalkettenübertragende Verbindungen eingesetzt werden, um das Molekulargewicht der durch die Polymerisation zugänglichen Polymerisate P zu reduzieren bzw. zu kontrollieren. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die während der erfindungsgemäßen Emulsionspolymerisation optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis E während der Polymerisation zugeführt werden.

Die nach dem erfindungsgemäßen Verfahren hergestellten Polymerisate P können prinzipiell Glasübergangstemperaturen Tg im Bereich von ≥ -70 und ≤ 150 °C aufweisen. Mit Vorteil werden die Monomeren A bis E in Art und Menge so gewählt, dass die hergestellten Polymerisate P eine Glasübergangstemperatur Tg im Bereich von ≥ -10 und ≤ 70 °C und vorteilhaft im Bereich ≥ 5 und ≤ 50 °C und insbesondere vorteilhaft im Bereich ≥ 20 und ≤ 40 °C aufweisen. Unter Glasübergangstemperatur Tg wird im Rahmen dieser Schrift die midpoint temperature nach ISO 11357-2 verstanden, ermittelt durch Differentialthermoanalyse (DSC; Aufheizrate 20 K/Minute) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Wesentlich ist, dass die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Gesamtmonomerenmenge, durchgeführt werden kann.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser Dw $\leq$ 100 nm, häufig $\geq$ 5 nm bis $\leq$ 50 nm und oft $\geq$ 15 nm bis $\leq$ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere Dw50-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser Dw50 und zahlenmittleren Teilchendurchmesser DN50 [Dw50/DN50] < 2,0, bevorzugt < 1,5 und insbesondere bevorzugt < 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur $\geq$ 50 °C, häufig $\geq$ 60 °C oder $\geq$ 70 °C und oft $\geq$ 80 °C oder $\geq$ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A bis E zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Die durch das erfindungsgemäße Verfahren zugänglichen wässrigen Polymerisat P-Dispersionen weisen üblicherweise einen Polymerisatfeststoffgehalt von $\geq$ 10 und $\leq$ 70 Gew.-%, häufig $\geq$ 20 und $\leq$ 65 Gew.-% und oft $\geq$ 25 und $\leq$ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel im Bereich $\geq$ 10 und $\leq$ 1000 nm, häufig im Bereich $\geq$ 10 und $\leq$ 700 nm und oft im Bereich $\geq$ 50 bis $\leq$ 400 nm.

In einer Ausführungsform sind demnach auch die wässrige Polymerisat P-Dispersionen umfasst, welche nach dem beschriebenen Verfahren erhältlich sind.

Die erfindungsgemäßen wässrigen Polymerisat P-Dispersionen eignen sich vorteilhaft zur Verwendung als

Bindemittel bei der Herstellung von Klebstoffen, Dichtmassen, Kunststoffputzen und Anstrichmitteln sowie bei der Sandverfestigung, als Komponente bei der Herstellung von Textil- oder Lederhilfsmittel und Schlagzähmodifier oder zur Modifizierung von mineralischen Bindemitteln und Kunststoffen.

Ferner sind aus den erfindungsgemäßen wässrigen Polymerisat P-Dispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls zur Verwendung als Bindemittel bei der Herstellung von Klebstoffen, Dichtmassen, Kunststoffputzen und Anstrichmitteln sowie bei der Sandverfestigung, als Komponente bei der Herstellung von Textil- oder Lederhilfsmittel und Schlagzähmodifier oder zur Modifizierung von mineralischen Bindemitteln und Kunststoffen einsetzen.

Mit besonderem Vorteil lassen sich die vorgenannten wässrigen Polymerisat P-Dispersionen jedoch als Bindemittel für körnige und/oder faserförmige Substrate einsetzen.

Werden die vorgenannten wässrigen Polymerisat P-Dispersionen als Bindemittel für körnige und/oder faserförmige Substrate eingesetzt, so können die erfindungsgemäßen wässrigen Bindemittelzusammensetzungen neben dem Polymerisat P zusätzlich noch weitere, dem Fachmann in Art und Menge geläufige Komponenten, wie beispielsweise Verdicker, Pigmentverteiler, Dispergiermittel, Emulgatoren, Puffersubstanzen, Neutralisationsmittel, Biozide, Entschäumer, Polyolverbindungen mit wenigstens 2 Hydroxygruppen und mit einem Molekulargewicht ≤ 200 g/mol, Filmbildehilfsmittel, Pigmente oder Füllstoffe etc. enthalten.

Vorteilhaft enthält die wässrige Bindemittelzusammensetzung jedoch ≤ 1 Gew.-%, insbesondere vorteilhaft ≤ 0,5 Gew.-% einer Polyolverbindung mit wenigstens 2 Hydroxygruppen und mit einem Molekulargewicht ≤ 200 g/mol, insbesondere ≤ 150 g/mol, wie beispielsweise Ethylenglykol, 1,2-Propandiol, 1,3-Propandiol, 1,2,3-Propantriol, 1,2-Butandiol, 1,4-Butandiol, 1,2,3,4-Butantetrol, Diethanolamin, Triethanolamin etc., bezogen auf die Gesamtmenge an Polymerisat P.

Erfindungswesentlich ist, die Gesamtmenge an zusätzlichen formaldehydhaltigen Bindemittelkomponenten in der wässrigen Bindemittelzusammensetzung ≤ 50 Gew.-Teile und vorteilhaft ≤ 10 Gew.-Teile pro 100 Gew.-Teilen an Polymerisat P beträgt. Mit besonderem Vorteil enthält die erfindungsgemäße Bindemittelzusammensetzung keinerlei formaldehydhaltige Bindemittelkomponenten.

Im Rahmen dieser Schrift sollen unter formaldehydhaltigen Bindemittelkomponenten solche Bindemittelkomponenten verstanden werden, zu deren Herstellung Formaldehyd eingesetzt wurde. Häufig erfolgt die Herstellung solcher formaldehydhaltigen Bindemittelkomponenten durch Kondensationsreaktion eines Edukts mit Formaldehyd. Problematisch an diesen formaldehydhaltigen Bindemittelkomponenten ist, dass sie noch bis zu 20000 ppm nicht abreagierten Formaldehyd enthalten und darüber hinaus bei der thermischen Behandlung während des Aushärtvorgangs bei einer Temperatur ≤ 250 °C zusätzlich noch gebundenen Formaldehyd freisetzen können. Beispiele für derartige Verbindungen sind die dem Fachmann geläufigen Harnstoff/Formaldehyd-Harze, Melamin/Formaldehyd-Harze, Phenol/Formaldehyd-Harze, Guanamin/Formaldehyd-Harze, Benzoguanamin/Formaldehyd-Harze oder Acetoguanamin/Formaldehyd-Harze.

Die erfindungsgemäße wässrige Bindemittelzusammensetzung eignet sich vorteilhaft zur Verwendung als Bindemittel für körnige und/oder faserförmige Substrate. Mit Vorteil lassen sich die genannten wässrigen Bindemittelzusammensetzungen daher bei der Herstellung von Formkörpern aus körnigen und/oder faserförmigen Substraten verwenden.

Körnige und/oder faserförmige Substrate sind dem Fachmann geläufig. Erfindungsgemäß können prinzipiell alle organischen oder anorganischen natürlichen und/oder synthetischen körnigen und/oder faserförmigen Verbindungen, deren längste Ausdehnung im Falle von körnigen Substraten ≤ 10 mm, bevorzugt ≤ 5 mm und insbesondere ≤ 1 mm und deren größter Durchmesser im Falle von faserförmigen Substraten ≤ 1 mm, bevorzugt ≤ 0,5 mm und insbesondere ≤ 0,1 mm beträgt, eingesetzt werden.

Bei den körnigen Substraten handelt es sich beispielsweise um weiße oder farbige Pigmentverbindungen, wie insbesondere Titandioxid, Zinkoxid, Zinksulfid, Eisen-, Cadmium-, Chrom- oder Bleioxide bzw. -sulfide sowie Bleimolybdate oder Kobaltblau oder um Füllstoffe (Brechungsindexwerte < 1,7), wie beispielsweise die natürlich vorkommenden Füllstoffe Calcit, Kreide, Dolomit, Kaolin, Talk, Glimmer, Diatomeenerde, Baryt oder die synthetisch hergestellten Füllstoffe präzipitiertes Calciumcarbonat oder Bariumsulfat sowie pyrogene Kieselsäure.

Bei den faserförmigen Substraten handelt es sich um Naturfasern, wie pflanzliche, tierische und mineralische Fasern oder um künstlich hergestellte Chemiefasern aus natürlichen oder synthetischen Polymeren. Beispiele für pflanzliche Fasern sind Baumwollfasern, Flachsfasern, Hanffasern, Kenaffasern, Jutefasern, Holzfasern oder Sisalfasern, Beispiele für tierische Fasern sind Wolle oder andere Tierhaare, ein Beispiel für mineralische Fasern ist Steinwolle, ein Beispiel für Chemiefasern natürlichen Ursprungs sind Viskosefasern und Beispiele für Chemiefasern auf Basis synthetischer Polymere sind Polyesterfasern, wie Polytrimethylenterephthalat-, Polyethylennaphthalat-, Polyethylenterephthalat- oder Polybutylenterephthalatfasern sowie die unterschiedlichen Polycarbonatfasern, Polyolefinfasern, wie insbesondere Polyethylen- oder Polypropylenfasern, Polyamidfasern, wie Polycaprolactamfasern (Polyacrylamid 6), Polyamidfasern aus Hexamethylendiamin und Adipinsäure (Polyacrylamid 66), Polyamidfasern aus Hexamethylendiamin und

Terephthalsäure (Polyacrylamid 6T), Polyamidfasern aus para-Phenylendiamin und Terephthalsäure (Aramid) sowie Mineralfasern, wie Glasfasern, Carbonfasern oder Basaltfasern.

Selbstverständlich umfasst der Begriff Substrat im Rahmen der vorliegenden Schrift vorteilhaft auch die aus Fasern erhältlichen Faservliese, wie beispielsweise so genannte mechanisch verfestigte, insbesondere genadelte Faservliese oder chemisch vorgebundene Faservliese.

Im Rahmen der vorliegenden Schrift soll unter einem Faservlies eine flächenförmige Faserschicht verstanden werden, bei der Fasern begrenzter Länge, Endlosfasern oder Garne jeglicher Art und jeglichen Ursprungs zu einem Vlies zusammengefügt und auf irgendeine Weise miteinander verbunden worden sind, insbesondere durch mechanische Verfestigung oder chemische Vorbindung.

Mit Vorteil werden erfindungsgemäß Faservliese eingesetzt, welche aus lignocellulosehaltigen Fasern, wie Baumwollfasern, Flachsfasern, Hanffasern, Kenaffasern, Jutefasern, Holzfasern und/oder Sisalfasern oder Mischungen davon mit thermoplastischen Kunststofffasern, wie Polyester- oder Polyolefinfasern, aufgebaut sind oder Glasfaservliese. In einer bevorzugten Ausführungsform werden Faservliese auf Basis von Polyester- und/oder Glasfasern eingesetzt.

Die erfindungsgemäß einsetzbaren Faservliese weisen in der Regel ein Flächengewicht von ≥ 10 und ≤ 3000 $g/m^2$, vorteilhaft von ≥ 40 und ≤ 1000 $g/m^2$ und besonders vorteilhaft von ≥ 50 und ≤ 500 $g/m^2$ auf.

Das Verfahren zur Herstellung eines Formkörpers aus einem körnigen und/oder faserförmigen Substrat und der eine wässrige Polymerisat P-Dispersion enthaltenden wässrigen Bindemittelzusammensetzung erfolgt vorteilhaft dergestalt, dass die erfindungsgemäße wässrige Bindemittelzusammensetzung auf ein körniges und/oder faserförmiges Substrat aufgebracht wird (Imprägnierung), gegebenenfalls das mit der wässrigen Bindemittelzusammensetzung behandelte (imprägnierte) körnige und/oder faserförmige Substrat in Form gebracht wird und anschließend das so erhaltene körnige und/oder faserförmige Substrat bei einer Temperatur getrocknet wird, welche über der Glasübergangstemperatur des Polymerisats P liegt.

Die Imprägnierung des körnigen und/oder faserförmigen Substrats erfolgt in der Regel dergestalt, dass die wässrige Bindemittelmittelzusammensetzung gleichmäßig auf die Oberfläche des faserförmigen und/oder körnigen Substrats aufgebracht wird. Dabei wird die Menge an wässriger Bindemittelzusammensetzung so gewählt, dass pro 100 g körnigem und/oder faserförmigem Substrat ≥ 1 g und ≤ 100 g, bevorzugt ≥ 2 g und ≤ 50 g und insbesondere bevorzugt ≥ 5 g und ≤ 30 g Polymerisat P aufgebracht werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats mit der erfindungsgemäßen wässrigen Bindemittelzusammensetzung.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet, wobei das Polymerisat P verfilmt.

Häufig erfolgt die Trocknung bei einer Trocknungstemperatur, welche ≥ 5 °C, vorteilhaft ≥ 10 °C und insbesondere vorteilhaft ≥ 20 °C über der Glasübergangstemperatur des Polymerisats P liegt.

Die nach dem erfindungsgemäßen Verfahren zugänglichen Formkörper weisen vorteilhafte Eigenschaften, wie insbesondere eine verbesserte Wärmestandfestigkeit auf.

Insbesondere vorteilhaft eignet sich die erfindungsgemäßen wässrigen Bindemittelzusammensetzungen, enthaltend eine wässrige Polymerisat P-Dispersion daher zur Herstellung von Faservliesen auf Polyester- und/oder Glasfaserbasis, welche sich ihrerseits insbesondere zur Herstellung von bitumierten Dachbahnen eignen.

Dabei ist die Herstellung von bitumierten Dachbahnen dem Fachmann geläufig und erfolgt insbesondere durch Aufbringen von verflüssigtem, gegebenenfalls modifiziertem Bitumen auf eine bzw. beide Seiten eines mit einer erfindungsgemäßen Bindemittelzusammensetzung gebundenen Polyester- und/oder Glasfaservlieses.

Die Erfindung soll anhand nachfolgender nicht einschränkender Beispiele erläutert werden.

## Beispiele

### I Herstellung der Polymerisate P in Form ihrer wässrigen Dispersionen

#### Polymerisatdispersion 1 (P1)

In einem 2 L-Glaskolben, ausgerüstet mit einem Rührer und 4 Dosiereinrichtungen wurden bei 20 bis 25 °C (Raumtemperatur) und unter Stickstoffatmosphäre 262,9 g entionisiertes Wasser sowie 43,8 g einer 20 gew.-%igen wässrigen Lösung eines $C_{16}C_{18}$-Fettalkoholethoxylates (Lutensol® AT 18, Produkt der BASF SE) und 12,3 mg Eisen-II-sulfat-Heptahydrat vorgelegt und unter Rühren auf 30 °C aufgeheizt. Zeitgleich beginnend wurden nun Zulauf 1 in Form einer homogenen wässrigen Emulsion sowie die Zuläufe 2 und 3 in Form von wässrigen Lösungen über einen Zeitraum von 4,0 Stunden kontinuierlich mit gleichbleibenden Mengenströmen zudosiert. Dabei wurde innerhalb von 20 Minuten nach Start von Zuläufe 1, 2 und 3 die Temperatur des wässrigen Polymerisationsgemisches von 30 auf 70 °C

erhöht.

Zulauf 1:

| | |
|---|---|
| 713,9 g | Vinylacetat |
| 95,4 g | n-Butylacrylat |
| 43,8 g | Glycidylmethacrylat |
| 17,5 g | Acrylsäure |
| 17,5 g | einer 25 gew.-%igen wässrigen Lösung von Vinylsulfonat |
| 20,5 g | einer 32 gew.-%igen wässrigen Lösung eines $C_{12}C_{14}$-Alkylpolyglykoletersulfat-Natriumsalzes (Disponil® FES 77, Produkt der Firma BASF SE) |
| 32,8 g | einer 20 gew.-%igen wässrigen Lösung von $C_{16}C_{18}$-Fettalkoholethoxylat (Lutensol® AT 18) |
| 252,6 g | entionisiertes Wasser |

Zulauf 2:

| | |
|---|---|
| 105,0 g | einer 2,5 gew.-%igen wässrige Lösung von Natriumperoxodisulfat |

Zulauf 3:

| | |
|---|---|
| 43,7 g | entionisiertes Wasser |
| 1,8 g | Natriumacetat |
| 1,5 g | Natriumhydroxymethylsulfonat (Rongalit® C, Produkt der Firma BASF SE) |

Nach Ende der Zuläufe 1 bis 3 wurden dem Polymerisationsgemisch innerhalb von 10 Minuten 68,3 g entionisiertes Wasser und 13, 7 g einer 32 gew.-%igen wässrige Lösung von $C_{12}C_{14}$-Alkylpolyglykoletersulfat-Natriumsalz (Disponil® FES 77) kontinuierlich mit gleichbleibenden Mengenströmen zudosiert. Anschließend ließ man das Polymerisationsgemisch noch 30 Minuten bei 70 °C nachreagieren. Zur Restmonomerenentfernung wurden danach bei gleichbleibender Temperatur zeitgleich beginnend 21,0 g einer 10 gew.-%igen wässrige Lösung tert.-Butylhydroperoxid und 29,4 g einer 13,1 gew.-%igen wässrige Lösung von Acetonbisulfit (1:1-Additionsprodukt von Aceton und Natriumhydrogensulfit) innerhalb von einer Stunde kontinuierlich mit gleichbleibenden Mengenströmen zudosiert. Anschließend wurde die wässrige Polymerisatdispersion auf Raumtemperatur abgekühlt und danach 5,3 g einer 7,5 gew.-%igen wässrige Lösung von Acticid® MBS sowie 1,6 g einer 1,5 gew.-%igen wässrige Lösung von Acticid® MV (Produkte der Firma Thor GmbH) zugegeben. Durch Zugabe von 10 gew.-%iger wässriger Natronlauge wurde ein pH-Wert von 5,0 eingestellt. Die erhaltene wässrige Polymerisatdispersion wurde abschließend über ein 500 μm-Filter filtriert.

Die so erhaltene wässrige Polymerisatdispersion wies einen Feststoffgehalt von 50,7 gew.-% bezogen auf das Gesamtgewicht der wässrigen Dispersion auf. Der zahlenmittlere Teilchendurchmesser wurde zu 169 nm bestimmt. Die Glasübergangstemperatur des Polymerisats wurde zu 34,2 °C bestimmt.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden).

Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13 321).

Zur Bestimmung der Glasübergangstemperatur wurden generell die wässrigen Polymerisatdispersionen mit einer Schichtdicke von ca. 1 mm auf eine Teflonfolie aufgetragen und die erhaltenen Filme für 24 Stunden bei 23 °C und 50 % rel. Luftfeuchtigkeit (Normklima) getrocknet. Die Glasübergangstemperatur wurde generell mittels eines Differential Scanning Calorimeters Q 2000 der Firma TA Instruments bestimmt. Typischerweise wurde von den erhaltenen Polymerisatfilmen eine Einwaage von ca. 8,5 mg verwendet. Die Aufheizrate betrug 20 K pro Minute. Es wurde jeweils die zweite Aufheizkurve detektiert und nach den Vorgaben ISO 11357-2 ausgewertet.

Vergleichsdispersion 1 (V1)

Die Herstellung der V1 erfolgte analog zur Herstellung der P1 mit dem Unterschied, dass in Zulauf 1 112,9 g anstelle von 95,4 g n-Butylacrylat eingesetzt wurden. Außerdem wurde keine Acrylsäure eingesetzt.
Die erhaltene wässrige Vergleichsdispersion wies einen Feststoffgehalt von 50,7 gew.-% bezogen auf das Gesamtgewicht der wässrigen Dispersion auf. Der zahlenmittlere Teilchendurchmesser wurde zu 129 nm bestimmt und die Glasübergangtemperatur zu 28,4 °C.

Vergleichsdispersion 2 (V2)

Die Herstellung der V2 erfolgte analog zur Herstellung der P1 mit dem Unterschied, dass in Zulauf 1 99,8 g anstelle von 95,4 g n-Butylacrylat eingesetzt wurden. Außerdem wurde keine Vinylsulfonsäure eingesetzt.
Die erhaltene wässrige Vergleichsdispersion wies einen Feststoffgehalt von 50,3 gew.-% bezogen auf das Gesamtgewicht der wässrigen Dispersion auf. Der zahlenmittlere Teilchendurchmesser wurde zu 184 nm bestimmt und die Glasübergangtemperatur zu 33,1 °C.

Vergleichsdispersion 3 (V3)

Die Herstellung der V3 erfolgte analog zur Herstellung der P1 mit dem Unterschied, dass in Zulauf 1 130,4 g anstelle von 95,4 g n-Butylacrylat und 26,3 g anstelle von 17,5 g Acrylsäure eingesetzt wurden. Außerdem wurde kein Glycidylmethacrylat eingesetzt.
Die erhaltene wässrige Vergleichsdispersion wies einen Feststoffgehalt von 50,8 gew.-% bezogen auf das Gesamtgewicht der wässrigen Dispersion auf. Der zahlenmittlere Teilchendurchmesser wurde zu 194 nm bestimmt und die Glasübergangtemperatur zu 28,7 °C.

Vergleichsdispersion 4 (V4)

Die Herstellung der V4 erfolgte analog zur Herstellung der P1 mit dem Unterschied, dass in Zulauf 1 495,3 g Methylmethacrylat anstelle von 713,9 g Vinylacetat und 314,0 g anstelle von 95,4 g n-Butylacrylat eingesetzt wurden. Es wurde kein Vinylacetat eingesetzt.
Nach 2 Stunden und 15 musste die Polymerisation infolge störender Belagbildung abgebrochen werden.

II Herstellung der gebundenen Faservliese und anwendungstechnische Untersuchungen

Zur Herstellung der gebundenen Faservliese wurde als Rohvlies ein genadeltes Polyethylenterephthalat-Spinnvlies (400 cm Länge, 40 cm Breite) mit einem Flächengewicht von 125 $g/m^2$ verwendet.
Zur Herstellung der Bindemittelflotten wurden die wässrige Polymerisatdispersion P1 sowie die Vergleichsdispersionen V1 bis V3 mit entionisiertem Wasser auf einen Feststoffgehalt von 13 Gew.-% verdünnt. Im Folgenden werden die erhaltenen Bindemittelflotten als Bindemittelflotten BP1 sowie BV1 bis BV3 bezeichnet.
Zur Herstellung der gebundenen Faservliese wurden die Rohvliese in einer Imprägnieranlage HVF mit Foulard der Firma Mathis (Gummiwalze Shore A = 85° /Stahlwalze) in Längsrichtung mit der jeweiligen Bindemittelflotte BP1 sowie BV1 bis BV3 getränkt. Dabei wurde jeweils der Nasseintrag auf 192,3 g Bindemittelflotte pro Quadratmeter (entsprechend einem Feststoffanteil von 25 $g/m^2$) eingestellt. Daran anschließend wurden die erhaltenen imprägnierten Faservliese in einem Industrietrockner der Fa. Fleissner für 3 Minuten bei 200 °C getrocknet und gebunden. Die dabei nach Abkühlung auf Raumtemperatur erhaltenen gebundenen Faservliese werden in Abhängigkeit der verwendeten Bindemittelflotten als Faservliese F1 sowie FV1 bis FV3 bezeichnet.

Bestimmung der Wärmestandfestigkeit

Die Bestimmung der Wärmestandfestigkeit der Faservliese F1 sowie FV1 bis FV3 erfolgte angelehnt an die DIN 18192 durch Messungen der Dehnung in Längsrichtung sowie der Schrumpfung in Querrichtung bei 200 °C. Hierzu wurden aus den Faservliesen in Längsrichtung 100 x 360 mm Streifen ausgestanzt. Auf den Faservliesstreifen wurde jeweils ausgehend von den beiden Schmalseiten im Abstand von jeweils 130 mm eine Markierung senkrecht zur Längsseite angebracht, wobei sich eine Messstrecke zwischen den Markierungen von 100 ± 0,2 mm ergab. Im Bereich der Mitte dieser Messstrecke wurde die Breite des Faservliesstreifens durch Messung kontrolliert. Daran anschließend wurden die schmalen Enden in Klemmschienen fixiert, so dass eine Einspannlänge von 300 mm resultierte. Parallel dazu wurden in einem Trockenschrank das zur Messung erforderliche Stativ sowie ein 4 kg schwerer Edelstahlzylinder auf 200 °C aufgeheizt. Zur Prüfung wurden nun die markierten und vermessenen Faservliesstreifen mittels der einen

Klemmschiene an das im Trockenschrank befindliche Stativ freihängend angebracht. Daran anschließend wurde der 4 kg schwere Edelstahlzylinder an die untere Klemmschiene gehängt, die Trockenschranktür geschlossen und das so eingespannte Faservlies für 10 Minuten bei 200 °C im Trockenschrank belassen. Daran anschließend wurde das Laborstativ mitsamt den belasteten Faservliesstreifen aus dem Trockenschrank genommen und für 5 Minuten bei Raumtemperatur abgekühlt. Danach wurden zuerst der Edelstahlzylinder von der unteren Klemmschiene und dann die obere Klemmschiene vom Stativ abgehängt (Stativ und Edelstahlzylinder wurden zur Temperierung für die nächste Messung wieder in den Trockenschrank gestellt). Nach Entfernen der oberen und unteren Klemmschiene wurde der Faservliesstreifen eben auf den Labortisch gelegt und der jeweilige Abstand zwischen den beiden angebrachten Markierungen (in Längsrichtung) sowie die jeweilige Breite an der schmalsten Stelle (in Querrichtung) der Faservliesstreifen gemessen. Es wurden jeweils Messungen an 9 separaten Messstreifen durchgeführt. Die in Tabelle 1 angegebenen Werte stellen die Mittelwerte dieser Messungen dar. Dabei sind die Ergebnisse umso besser zu bewerten, je geringer die Dehnung in Längsrichtung und je geringer die Schrumpfung in Querrichtung ist. Angegeben ist die Änderung in Längs- bzw. Querrichtung in Prozent, bezogen auf die entsprechenden Abstände vor der thermischen/mechanischen Behandlung.

Tabelle 1: Ergebnisse der der Wärmestandfestigkeit bei 200 °C

| Faservlies | Dehnung [in %] | Schrumpfung [in %] |
|---|---|---|
| F1 | 3,9 | - 5,6 |
| FV1 | > 10 | < -15 |
| FV2 | 5,6 | - 8,3 |
| FV3 | > 10 | < -15 |

Aus den Ergebnissen ist klar ersichtlich, dass das mit der erfindungsgemäßen Bindemittelflotte BP1 hergestellte Faservlies im Vergleich zu den mit den Bindemittelflotten BV1 bis BV3 eine verbesserte Wärmestandfestigkeit bei 200 °C aufwiesen.

**Patentansprüche**

1. Verfahren zur Herstellung einer wässrigen Dispersion eines Polymerisats P durch radikalisch initiierte wässrige Emulsionspolymerisation ethylenisch ungesättigter Verbindungen, **dadurch gekennzeichnet, dass**

| | |
|---|---|
| ≥ 0,1 und ≤ 5,0 Gew.-% | wenigstens einer $\alpha,\beta$-monoethylenisch ungesättigten $C_3$- bis $C_6$-Mono- oder Dicarbonsäure (Monomere A), |
| ≥ 0,1 und ≤ 10 Gew.-% | wenigstens einer monoethylenisch ungesättigten Verbindung mit wenigstens einer Epoxygruppe (Monomere B), |
| ≥ 0,1 und ≤ 5,0 Gew.-% | wenigstens einer monoethylenisch ungesättigten Verbindung mit wenigstens einer Sulfonsäuregruppe (Monomere C), |
| ≥ 70 und ≤ 95 Gew.-% | wenigstens eines Esters aus Vinylalkohol und einer $C_1$- bis $C_5$-Monocarbonsäure (Monomere D), und |
| ≥ 0 und ≤ 25 Gew.-% | wenigstens einer ethylenisch ungesättigten Verbindung, welche sich von den Monomeren A bis D unterscheidet (Monomere E), |

wobei sich die Mengen der Monomeren A bis E auf 100 Gew.-% aufsummieren, zur Polymerisation eingesetzt werden.

2. Verfahren nach Anspruch 1, **dadurch gekennzeichnet, dass** das wenigstens eine Monomere A ausgewählt ist aus der Gruppe umfassend Acrylsäure, Methacrylsäure, Crotonsäure, Fumarsäure, Maleinsäure, Maleinsäureanhydrid, 2-Methylmaleinsäure und Itaconsäure.

3. Verfahren nach einem der Ansprüche 1 oder 2, **dadurch gekennzeichnet, dass** das wenigstens eine Monomere B ausgewählt ist aus der Gruppe umfassend Vinyloxiran, Allyloxiran, Glycidylacrylat und Glycidylmethacrylat.

4. Verfahren nach einem der Ansprüche 1 bis 3, **dadurch gekennzeichnet, dass** das wenigstens eine Monomere C Vinylsulfonsäure und/oder 2-Acrylamido-2-methylpropansulfonsäure ist.

**5.** Verfahren nach einem der Ansprüche 1 bis 4, **dadurch gekennzeichnet, dass** das wenigstens eine Monomere D Vinylacetat und/oder Vinylpropionat ist.

**6.** Verfahren nach einem der Ansprüche 1 bis 5, **dadurch gekennzeichnet, dass** das wenigstens eine Monomere E ausgewählt ist aus der Gruppe umfassend Olefine, konjugierte aliphatische $C_4$- bis Cg-Dienverbindungen, Ester aus Vinylalkohol und einer $C_6$- bis $C_{18}$-Monocarbonsäure, $C_1$- bis $C_{10}$-Alkylacrylate, $C_1$- bis $C_{10}$-Alkylmethacrylate, $C_5$- bis $C_{10}$-Cycloalkylacrylate und -methacrylat, $C_1$- bis $C_{10}$-Dialkylmaleinate und $C_1$- bis $C_{10}$-Dialkylfumarate, vinylaromatische Monomere, Mono- oder Dinitrile einer ethylenisch ungesättigten $C_3$- bis $C_6$-Mono- oder Dicarbonsäure und Mono- oder Dicarbonsäureamide einer ethylenisch ungesättigten $C_3$- bis $C_6$-Mono- oder Dicarbonsäure.

**7.** Verfahren nach einem der Ansprüche 1 bis 6, **dadurch gekennzeichnet, dass**

| | |
|---|---|
| $\geq$ 0,5 und $\leq$ 4,0 Gew.-% | wenigstens eines Monomeren A, |
| $\geq$ 2,0 und $\leq$ 8,0 Gew.-% | wenigstens eines Monomeren B, |
| $\geq$ 0,1 und $\leq$ 1,5 Gew.-% | wenigstens eines Monomeren C, |
| $\geq$ 75 und $\leq$ 85 Gew.-% | wenigstens eines Monomeren D, und |
| $\geq$ 0,1 und $\leq$ 20 Gew.-% | wenigstens eines Monomeren E |

eingesetzt werden.

**8.** Verfahren nach einem der Ansprüche 1 bis 7, **dadurch gekennzeichnet, dass**

| | |
|---|---|
| $\geq$ 0,5 und $\leq$ 3,0 Gew.-% | wenigstens eines Monomeren A, |
| $\geq$ 3,0 und $\leq$ 7,0 Gew.-% | wenigstens eines Monomeren B, |
| $\geq$ 0,1 und $\leq$ 1,0 Gew.-% | wenigstens eines Monomeren C, |
| $\geq$ 78 und $\leq$ 83 Gew.-% | wenigstens eines Monomeren D, und |
| $\geq$ 5,0 und $\leq$ 15 Gew.-% | wenigstens eines Monomeren E |

eingesetzt werden.

**9.** Verfahren nach einem der Ansprüche 1 bis 8, **dadurch gekennzeichnet, dass** als Monomere A Acrylsäure und/oder Methacrylsäure, als Monomere B Glycidylacrylat und/oder Glycidylmethacrylat, als Monomer C Vinylsulfonsäure, als Monomer D Vinylacetat und als Monomere E n-Butylacrylat und/oder 2-Ethylhexylacrylat eingesetzt werden.

**10.** Verfahren nach einem der Ansprüche 1 bis 9, **dadurch gekennzeichnet, dass** die Art und die Menge der Monomeren A bis E so gewählt werden, dass das Polymerisat P eine Glasübergangstemperatur $\geq$ 20 und $\leq$ 40 °C, bestimmt nach ISO 11357-2 aufweist.

**11.** Wässrige Polymerisatdispersion erhältlich nach einem Verfahren gemäß einem der Ansprüche 1 bis 10.

**12.** Polymerisatpulver erhältlich durch Trocknung einer wässrigen Polymerisatdispersion gemäß Anspruch 11.

**13.** Verwendung einer wässrigen Polymerisatdispersion gemäß Anspruch 11 oder eines Polymerisatpulvers gemäß Anspruch 12 als Bindemittel bei der Herstellung von Klebstoffen, Dichtmassen, Kunststoffputzen und Anstrichmitteln sowie bei der Sandverfestigung, als Komponente bei der Herstellung von Textil- oder Lederhilfsmittel und Schlagzähmodifier oder zur Modifizierung von mineralischen Bindemitteln und Kunststoffen.

**14.** Verwendung einer wässrigen Polymerisatdispersion gemäß Anspruch 11 als Bindemittel für körnige und/oder faserförmige Substrate.

**15.** Verfahren zur Herstellung eines Formkörpers aus körnigen und/oder faserförmigen Substraten, **dadurch gekennzeichnet, dass** eine wässrige Bindemittelzusammensetzung enthaltend eine wässrige Polymerisatdispersion gemäß Anspruch 11 auf das körnige und/oder faserförmige Substrat aufgebracht wird, gegebenenfalls das so behandelte körnige und/oder faserförmige Substrat in Form gebracht wird und anschließend das so erhaltene körnige und/oder faserförmige Substrat bei einer Temperatur getrocknet wird, welche über der Glasübergangstemperatur des Polymerisats P liegt.

16. Verfahren zur Herstellung eines Formkörpers gemäß Anspruch 15, **dadurch gekennzeichnet, dass** die Menge an wässriger Bindemittelzusammensetzung so gewählt wird, dass pro 100 g körnigem und/oder faserförmigem Substrat ≥ 1 und ≤ 100 g Polymerisat P aufgebracht werden.

17. Formkörper erhältlich nach einem Verfahren gemäß einem der Ansprüche 15 oder 16.

18. Verwendung eines Formkörpers gemäß Anspruch 17 zur Herstellung bitumierter Dachbahnen.

19. Bitumierte Dachbahn hergestellt unter Verwendung eines Formkörpers gemäß Anspruch 17.

## Claims

1. A process for producing an aqueous dispersion of a polymer P by free-radically initiated aqueous emulsion polymerization of ethylenically unsaturated compounds, which comprises using

| | |
|---|---|
| ≥ 0.1 and ≤ 5.0 wt% | of at least one α,β-monoethylenically unsaturated $C_3$ to $C_6$ mono- or dicarboxylic acid (monomers A), |
| ≥ 0.1 and ≤ 10 wt% | of at least one monoethylenically unsaturated compound having at least one epoxy group (monomers B), |
| ≥ 0.1 and ≤ 5.0 wt% | of at least one monoethylenically unsaturated compound having at least one sulfonic acid group (monomers C), |
| ≥ 70 and ≤ 95 wt% | of at least one ester formed from vinyl alcohol and a $C_1$ to $C_5$ monocarboxylic acid (monomers D), and |
| ≥ 0 and ≤ 25 wt% | of at least one ethylenically unsaturated compound other than said monomers A to D (monomers E) , |

wherein the amounts of monomers A to E sum to 100 wt%, for the polymerization.

2. The process according to claim 1 wherein the at least one monomer A is selected from the group comprising acrylic acid, methacrylic acid, crotonic acid, fumaric acid, maleic acid, maleic anhydride, 2-methylmaleic acid and itaconic acid.

3. The process according to either of claims 1 and 2 wherein the at least one monomer B is selected from the group comprising vinyloxirane, allyloxirane, glycidyl acrylate and glycidyl methacrylate.

4. The process according to any of claims 1 to 3 wherein the at least one monomer C is vinylsulfonic acid and/or 2-acrylamido-2-methylpropanesulfonic acid.

5. The process according to any of claims 1 to 4 wherein the at least one monomer D is vinyl acetate and/or vinyl propionate.

6. The process according to any of claims 1 to 5 wherein the at least one monomer E is selected from the group comprising olefins, conjugated aliphatic $C_4$ to $C_9$ diene compounds, esters formed from vinyl alcohol and a $C_6$ to $C_{18}$ monocarboxylic acid, $C_1$ to $C_{10}$ alkyl acrylates, $C_1$ to $C_{10}$ alkyl methacrylates, $C_5$ to $C_{10}$ cycloalkyl acrylates and methacrylate, $C_1$ to $C_{10}$ dialkyl maleates and $C_1$ to $C_{10}$ dialkyl fumarates, vinylaromatic monomers, mono- or dinitriles of an ethylenically unsaturated $C_3$ to $C_6$ mono- or dicarboxylic acid, and mono- or dicarboxamides of an ethylenically unsaturated $C_3$ to $C_6$ mono- or dicarboxylic acid.

7. The process according to any of claims 1 to 6 wherein

≥ 0.5 and ≤ 4.0 wt% of at least one monomer A,
≥ 2.0 and ≤ 8.0 wt% of at least one monomer B,
≥ 0.1 and ≤ 1.5 wt% of at least one monomer C,
≥ 75 and ≤ 85 wt% of at least one monomer D, and
≥ 0.1 and ≤ 20 wt% of at least one monomer E

are used.

**8.** The process according to any of claims 1 to 7 wherein

≥ 0.5 and ≤ 3.0 wt% of at least one monomer A,
≥ 3.0 and ≤ 7.0 wt% of at least one monomer B,
≥ 0.1 and ≤ 1.0 wt% of at least one monomer C,
≥ 78 and ≤ 83 wt% of at least one monomer D, and
≥ 5.0 and ≤ 15 wt% of at least one monomer E

are used.

**9.** The process according to any of claims 1 to 8 wherein acrylic acid and/or methacrylic acid are used as monomers A, glycidyl acrylate and/or glycidyl methacrylate as monomers B, vinylsulfonic acid as monomer C, vinyl acetate as monomer D and n-butyl acrylate and/or 2-ethylhexyl acrylate as monomers E.

**10.** The process according to any of claims 1 to 9 wherein said monomers A to E are chosen in terms of type and amount such that said polymer P has a glass transition temperature ≥ 20 and ≤ 40°C, as determined to ISO 11357-2.

**11.** An aqueous polymer dispersion obtainable by a process according to any of claims 1 to 10.

**12.** A polymer powder obtainable by drying an aqueous polymer dispersion according to claim 11.

**13.** A method of using an aqueous polymer dispersion according to claim 11 or a polymer powder according to claim 12 as a binder in the manufacture of adhesives, sealants, renders and paints and also in sand consolidation, as a component in the manufacture of textile or leather auxiliaries and impact modifiers for modifying mineral binders and plastics.

**14.** A method of using an aqueous polymer dispersion according to claim 11 as a binder for granular and/or fibrous substrates.

**15.** A process of producing a shaped article from granular and/or fibrous substrates, which comprises applying an aqueous binder composition comprising an aqueous polymer dispersion according to claim 11 atop the granular and/or fibrous substrate, optionally shaping the granular and/or fibrous substrate thus treated and then drying the granular and/or fibrous substrate thus obtained at a temperature above the glass transition temperature of polymer P.

**16.** The process for producing a shaped article according to claim 15 wherein the amount of aqueous binder composition is chosen such that ≥ 1 and ≤ 100 g of polymer P be applied per 100 g of granular and/or fibrous substrate.

**17.** A shaped article obtainable by a process according to either of claims 15 and 16.

**18.** A method of using a shaped article according to claim 17 in the manufacture of bituminized roofing membranes.

**19.** A bituminized roofing membrane obtained using a shaped article according to claim 17.

## Revendications

**1.** Procédé de fabrication d'une dispersion aqueuse d'un polymère P par polymérisation en émulsion aqueuse initiée radicalairement de composés éthyléniquement insaturés, **caractérisé en ce que**
≥ 0,1 et ≤ 5,0 % en poids d'au moins un acide mono- ou dicarboxylique en $C_3$ à $C_6$ $\alpha,\beta$-monoéthyléniquement insaturé (monomères A),
≥ 0,1 et ≤ 10 % en poids d'au moins un composé monoéthyléniquement insaturé contenant au moins un groupe époxy (monomères B),
≥ 0,1 et ≤ 5,0 % en poids d'au moins un composé monoéthyléniquement insaturé contenant au moins un groupe acide sulfonique (monomères C),
≥ 70 et ≤ 95 % en poids d'au moins un ester de l'alcool vinylique et d'un acide monocarboxylique en $C_1$ à $C_5$ (monomères D), et

≥ 0 et ≤ 25 % en poids d'au moins un composé éthyléniquement insaturé, qui diffère des monomères A à D (monomères E),
la somme des quantités des monomères A à E étant de 100 % en poids, sont utilisés pour la polymérisation.

**2.** Procédé selon la revendication 1, **caractérisé en ce que** ledit au moins un monomère A est choisi dans le groupe comprenant l'acide acrylique, l'acide méthacrylique, l'acide crotonique, l'acide fumarique, l'acide maléique, l'anhydride de l'acide maléique, l'acide 2-méthylmaléique et l'acide itaconique.

**3.** Procédé selon l'une quelconque des revendications 1 ou 2, **caractérisé en ce que** ledit au moins un monomère B est choisi dans le groupe comprenant le vinyloxirane, l'allyloxirane, l'acrylate de glycidyle et le méthacrylate de glycidyle.

**4.** Procédé selon l'une quelconque des revendications 1 à 3, **caractérisé en ce que** ledit au moins un monomère C est l'acide vinylsulfonique et/ou l'acide 2-acrylamido-2-méthylpropanesulfonique.

**5.** Procédé selon l'une quelconque des revendications 1 à 4, **caractérisé en ce que** ledit au moins un monomère D est l'acétate de vinyle et/ou le propionate de vinyle.

**6.** Procédé selon l'une quelconque des revendications 1 à 5, **caractérisé en ce que** ledit au moins un monomère E est choisi dans le groupe comprenant les oléfines, les composés diéniques en $C_4$ à $C_9$ aliphatiques conjugués, les esters de l'alcool vinylique et d'un acide monocarboxylique en $C_6$ à $C_{18}$, les acrylates d'alkyle en $C_1$ à $C_{10}$, les méthacrylates d'alkyle en $C_1$ à $C_{10}$, les acrylates et méthacrylates de cycloalkyle en $C_5$ à $C_{10}$, les maléinates de dialkyle en $C_1$ à $C_{10}$ et les fumarates de dialkyle en $C_1$ à $C_{10}$, les monomères aromatiques de vinyle, les mono- ou dinitriles d'un acide mono- ou dicarboxylique en $C_3$ à $C_6$ éthyléniquement insaturé, et les amides d'acides mono- ou dicarboxyliques d'un acide mono- ou dicarboxylique en $C_3$ à $C_6$ éthyléniquement insaturé.

**7.** Procédé selon l'une quelconque des revendications 1 à 6, **caractérisé en ce que**
≥ 0,5 et ≤ 4,0 % en poids d'au moins un monomère A,
≥ 2,0 et ≤ 8,0 % en poids d'au moins un monomère B,
≥ 0,1 et ≤ 1,5 % en poids d'au moins un monomère C,
≥ 75 et ≤ 85 % en poids d'au moins un monomère D, et
≥ 0,1 et ≤ 20 % en poids d'au moins un monomère E sont utilisés.

**8.** Procédé selon l'une quelconque des revendications 1 à 7, **caractérisé en ce que**
≥ 0,5 et ≤ 3,0 % en poids d'au moins un monomère A,
≥ 3,0 et ≤ 7,0 % en poids d'au moins un monomère B,
≥ 0,1 et ≤ 1,0 % en poids d'au moins un monomère C,
≥ 78 et ≤ 83 % en poids d'au moins un monomère D, et
≥ 5,0 et ≤ 15 % en poids d'au moins un monomère E sont utilisés.

**9.** Procédé selon l'une quelconque des revendications 1 à 8, **caractérisé en ce que** l'acide acrylique et/ou l'acide méthacrylique sont utilisés en tant que monomères A, l'acrylate de glycidyle et/ou le méthacrylate de glycidyle sont utilisés en tant que monomères B, l'acide vinylsulfonique est utilisé en tant que monomère C, l'acétate de vinyle est utilisé en tant que monomère D, et l'acrylate de n-butyle et/ou l'acrylate de 2-éthylhexyle sont utilisés en tant que monomères E.

**10.** Procédé selon l'une quelconque des revendications 1 à 9, **caractérisé en ce que** le type et la quantité des monomères A à E sont choisis de telle sorte que le polymère P présente une température de transition vitreuse ≥ 20 et ≤ 40 °C, déterminée selon ISO 11357-2.

**11.** Dispersion aqueuse de polymère, pouvant être obtenue par un procédé selon l'une quelconque des revendications 1 à 10.

**12.** Poudre de polymère pouvant être obtenue par séchage d'une dispersion aqueuse de polymère selon la revendication 11.

**13.** Utilisation d'une dispersion aqueuse de polymère selon la revendication 11 ou d'une poudre de polymère selon la revendication 12 en tant que liant lors de la fabrication d'adhésifs, de matériaux d'étanchéité, d'enduits en matières

plastiques et de peintures, ainsi que lors de la consolidation de sable, en tant que composant lors de la fabrication d'adjuvants pour textiles ou cuir et de modificateurs de la résistance aux impacts, ou pour la modification de liants minéraux et de matières plastiques.

**14.** Utilisation d'une dispersion aqueuse de polymère selon la revendication 11 en tant que liant pour des substrats granulaires et/ou fibreux.

**15.** Procédé de fabrication d'un corps moulé à partir de substrats granulaires et/ou fibreux, **caractérisé en ce qu'**une composition aqueuse de liant contenant une dispersion aqueuse de polymère selon la revendication 11 est appliquée sur le substrat granulaire et/ou fibreux, le substrat granulaire et/ou fibreux ainsi traité est éventuellement mis en forme, puis le substrat granulaire et/ou fibreux ainsi obtenu est séché à une température qui est supérieure à la température de transition vitreuse du polymère P.

**16.** Procédé de fabrication d'un corps moulé selon la revendication 15, **caractérisé en ce que** la quantité de composition aqueuse de liant est choisie de telle sorte que ≥ 1 et ≤ 100 g de polymère P soit appliqué pour 100 g de substrat granulaire et/ou fibreux.

**17.** Corps moulé pouvant être obtenu par un procédé selon l'une quelconque des revendications 15 ou 16.

**18.** Utilisation d'un corps moulé selon la revendication 17 pour la fabrication de bandes de couverture bituminées.

**19.** Bande de couverture bituminée fabriquée en utilisant un corps moulé selon la revendication 17.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013124417 A1
- WO 2011131279 A
- WO 2008150647 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- US 2520959 A
- US 3397165 A


### In der Beschreibung aufgeführte Nicht-Patentliteratur


- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Makromolekulare Stoffe. Houben-Weyl, Methoden der organischen Chemie. Georg-Thieme-Verlag, 1961, vol. XIV/1, 411-420
- Makromolekulare Stoffe. Houben-Weyl, Methoden der organischen Chemie. Georg-Thieme-Verlag, 1961, vol. XIV/1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **J. BRANDRUP ; E.H. IMMERGUT.** Polymerhandbook. John Wiley & Sons, 1989, 133-141
- Ullmann's Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175